(19) Europäisches Patentamt
European Patent Office
Office européen des brevets

(11) EP 3 034 302 B1

(12) **EUROPEAN PATENT SPECIFICATION**

(45) Date of publication and mention of the grant of the patent:
**22.08.2018 Bulletin 2018/34**

(21) Application number: **15202523.5**

(22) Date of filing: **02.03.2011**

(51) Int Cl.:
***B32B 27/08*** *(2006.01)* ***B32B 27/36*** *(2006.01)*
***B29C 45/14*** *(2006.01)* ***B29C 51/14*** *(2006.01)*
***C08G 64/02*** *(2006.01)*

(54) **LAMINATE**

LAMINAT

STRATIFIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2010 JP 2010046630**

(43) Date of publication of application:
**22.06.2016 Bulletin 2016/25**

(62) Document number(s) of the earlier application(s) in accordance with Art. 76 EPC:
**11750703.8 / 2 543 510**

(73) Proprietor: **Mitsubishi Chemical Corporation**
**Tokyo 100-8251 (JP)**

(72) Inventors:
- **YOKOGI, Masashi**
  **Tokyo 100-8251 (JP)**
- **KITADE, Taku**
  **Tokyo 100-8251 (JP)**
- **KAWANO, Masahiko**
  **Tokyo 100-8251 (JP)**
- **KATSUHARA, Kazunari**
  **Tokyo 100-8251 (JP)**

(74) Representative: **Vossius & Partner**
**Patentanwälte Rechtsanwälte mbB**
**Siebertstrasse 3**
**81675 München (DE)**

(56) References cited:
**US-A1- 2009 105 444** **US-B2- 7 521 119**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a laminate which comprises a polycarbonate resin. In particular, the invention relates to a display cover that combines surface hardness, which is not attainable by aromatic polycarbonate resin sheets, with impact resistance and punchability, which are not attainable by acrylic resins or laminates comprising an acrylic resin disposed as a surface layer. The invention further relates to a laminate that has yellowing deterioration resistance, which is not attainable by aromatic polycarbonate resin sheets to which the function of absorbing ultraviolet rays has been imparted, and that is suitable for use as building materials for carports, resinous windows, and sound-insulating walls.

### Background Art

Aromatic polycarbonate resins have come to be extensively used as display cover bases in place of thin glass plates. Although aromatic polycarbonate resins are excellent in terms of transparency, impact resistance, punchability, heat resistance, low specific gravity, low cost, etc., the resins have an exceedingly low surface hardness. In addition, there are the cases where aromatic polycarbonate resins are regarded as insufficient in light transmission property or reflection property since the resins show light absorption in a near-ultraviolet to visible-light wavelength region. Especially with respect to surface hardness, there generally is a tendency that even when a hardcoat layer is disposed on a base which has a low hardness, the resultant surface layer does not have a sufficiently heightened hardness.

Because of this, display covers which comprise an aromatic polycarbonate resin as the bases thereof have insufficient abrasion resistance, and it is difficult for such display covers to be suitable for use as display covers for cell phones, touch panels, and the like which are frequently touched with the hand.

Meanwhile, acrylic resins represented by resins formed from monomers comprising methyl methacrylate as a main component are also used in limited quantities. Such acrylic resins have a high surface hardness and have exceedingly high transparency and light transmission properties because the resins do not show light absorption such as the light absorption by the aromatic polycarbonate resins. However, the acrylic resins have considerably low impact resistance and punching thereof tends to result in a reduced yield.

Display covers are becoming thinner in recent years like the housings of electrical/electronic appliances and the like which are required to be thinner. The display covers comprising an acrylic resin as the bases thereof become insufficient more and more in impact resistance and punchability as the thicknesses thereof decrease.

In recent years, investigations are being made on a technique in which an aromatic polycarbonate resin is laminated to such an acrylic resin so that the acrylic resin layer is disposed as the front-side layer of the resultant display cover, thereby enabling the product to combine surface hardness and impact resistance.

Aromatic polycarbonate resins are in extensive use also in transparent building material applications. Although aromatic polycarbonate resins have excellent transparency and impact resistance, the resins show light absorption in a near-ultraviolet to visible-light wavelength region to give transmitted light which is slightly yellowish. Resin deterioration proceeds due to the light absorption, and the yellowing is enhanced with the progress of the deterioration. Under these circumstances, a technique is being employed in which an ultraviolet absorber is incorporated into aromatic polycarbonate resins to inhibit the progress of yellowing, mainly for applications in which the resins are exposed to solar radiation outdoors.

On the other hand, it may be thought that acrylic resins and the like are suitable for outdoor applications in view of freedom from the light absorption. However, because of the low heat resistance, the acrylic resins basically are unusable in applications in which the resins are exposed to a high-temperature environment due to solar radiation, etc.

### Prior-Art Documents

#### Patent Documents

Patent Document 1: JP-A-2000-321993
Patent Document 2: JP-A-2001-134196
Patent Document 3: JP-A-2002-232542
Patent Document 4: JP-A-2004-130540
Patent Document 5: JP-A-2004-143365
Patent Document 6: JP-A-2007-237700

Patent Document 7: US 2009/0105444 A1

Summary of the Invention

Problems that the Invention is to Solve

Display covers in which the bases have a laminate structure such as that described above have relatively satisfactory surface hardness and impact resistance when the overall thickness thereof is as large as 0.4 mm or more, which is in extensive use presently. However, in the case where thickness reduction proceeds and such display covers come to have an overall thickness of about 0.3 mm or less, the brittleness of the acrylic resin becomes conspicuous, resulting in considerably reduced impact resistance.
With respect to punchability, such display covers show relatively better punchability than layers of an acrylic resin alone. However, even when such display covers have the thickness in current use, there still is the tendency of resulting in a decrease in yield due to cracking, generation of chips, etc. No investigations for improving the punchability have been made. It becomes difficult more and more to solve that problem, as the thickness reduction proceeds.
Moreover, ultraviolet absorbers generally are highly expensive additives, and the expected effect is obtained only when the ultraviolet absorbers are incorporated in a large amount. The cost of additives hence rises considerably. In addition, since the ultraviolet absorbers themselves deteriorate with the lapse of time by the action of ultraviolet rays, the effect thereof does not last long; this is a problem to be solved in order to extensively use the resins in applications in which the merchandise lives are long, such as building materials.
A subject for the invention is provide: a display cover that combines surface hardness, which is not attainable by aromatic polycarbonate resin sheets, with impact resistance and punchability, which are not attainable by acrylic resins or laminates comprising an acrylic resin disposed as a surface layer; and a laminate that has yellowing deterioration resistance, which is not attainable by aromatic polycarbonate resin sheets to which the function of absorbing ultraviolet rays has been imparted, and that is suitable for use as building materials, etc.

Means for Solving the Problems

The present inventors made intensive investigations in order to overcome the problems described above. As a result, the inventors have found that a laminate obtained by laminating a specific polycarbonate resin to an aromatic polycarbonate resin can be processed by punching with satisfactory yield irrespective of whether the overall thickness thereof is the thickness in current use or is a reduced thickness.
The inventors have further found that a display cover which comprises a layer of the specific polycarbonate resin and which is used so that the layer is disposed on the front side is excellent in terms of the surface hardness and impact resistance of the product. The invention has been thus completed.
The inventors have furthermore found that the surface hardness is further enhanced, without considerably reducing the punchability and impact resistance, by disposing a hardcoat layer at least on the front-side surface.
Meanwhile, the specific polycarbonate resin to be used in the invention shows substantially no light absorption in a near-ultraviolet to visible-light wavelength region. It has hence been found that even when an ultraviolet absorber is incorporated in a considerably reduced amount or incorporation thereof is omitted, the yellowing deterioration of the resin proceeds extremely slowly, and that the merchandise can have a greatly prolonged life even in outdoor applications.
In the invention, the term "contained as a main component" means that the proportion of the ingredient in the portion is 50% by mole or more, preferably 75% by mole or more.
The invention is defined by reference to the appended claims 1-15.

Effects of the Invention

The laminate of the invention arouses few troubles when processed by punching, and is excellent in terms of the surface hardness and impact resistance of the product. With the laminate, it is possible to attain a thickness reduction in products without impairing those properties. Furthermore, since the surface hardness can be further heightened by disposing a hardcoat layer at least on the front-side surface, the laminate is suitable for use in display cover applications.
Moreover, the laminate of the invention can be inhibited from suffering yellowing deterioration and be made to attain a prolongation of merchandise lives, while greatly reducing the amount of an ultraviolet absorber to be contained therein. The laminate hence is suitable for use as transparent building materials. In addition, since the laminate has satisfactory drawing properties and formability during thermoforming, the laminate is suitable also for various products of thermoforming.

Modes for Carrying Out the Invention

<Polycarbonate Resin Layer (Layer A)>

The laminate of the invention comprises a polycarbonate resin layer (layer A). The polycarbonate resin to be used for forming the layer A contains a structural unit derived from a dihydroxy compound having, as part of the structure thereof, a site represented by the following formula (1).

[Chem. 3]

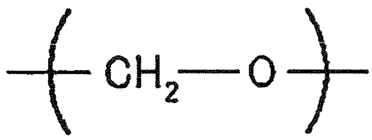

(1)

However, the case where the site represented by the above formula (1) is part of $-CH_2-O-H$ is omitted.

The dihydroxy compound is a compound which at least contains two hydroxyl groups and a site represented by the above formula (1) and in which the oxygen atom possessed by the site represented by the formula (1) is not part of a hydroxyl group.

The dihydroxy compound is a compound having an anhydrous sugar alcohol represented by dihydroxy compounds represented by the following formula (2).

Other dihydroxy compounds which are not according to formula (2) of the invention include compounds which have an aromatic group as a side chain and have, in the main chain, ether groups each bonded to an aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3, 5-dimethylphenyl)fluorene, 9,9-bis(4-(2-hydroxyethoxy)-3 -tert-butyl-6-methylphenyl)fluorene and 9,9-bis(4-(3 -hydroxy-2,2-dimethylpropoxy)phenyl)fluorene and also dihydroxy compounds having a cyclic ether structure which are represented by spiro glycols represented by the following formula (3).

The anhydrous sugar alcohols usually are compounds which have a plurality of hydroxy groups and are obtained by the dehydrating cyclization of saccharides or derivatives thereof. The dihydroxy compounds having a cyclic ether structure are compounds which have both a structure portion having a cyclic ether structure and two hydroxy groups.

In both the anhydrous sugar alcohols and the dihydroxy compounds having a cyclic ether structure, the hydroxy groups each may have been directly bonded to a cyclic structure or may have been bonded to a cyclic structure through a substituent. The cyclic structure may be a monocycle or a polycycle.

The anhydrous sugar alcohols and the dihydroxy compounds having a cyclic ether structure in the molecule thereof preferably are compounds which each have a plurality of cyclic structures. More preferred are compounds having two cyclic structures. It is even more preferred that these two cyclic structures should be the same.

More specific examples of the dihydroxy compounds represented by the following formula (2) include isosorbide, isomannide, and isoidide, which are stereoisomers.

Examples of the dihydroxy compounds having a cyclic ether structure include dihydroxy compounds having a cyclic ether structure which are represented by the following formula (3).

Examples of such dihydroxy compounds having a cyclic ether structure include 3,9-bis(1,1-dimethyl-2-hydroxyethyl)-2,4,8,10-tetraoxaspiro(5.5)undecane (common name; spiro glycol), 3,9-bis(1,1-diethyl-2-hydroxyethyl)-2,4,8,10-tetraoxaspiro(5.5)undecane, 3,9-bis(1,1-dipropyl-2-hydroxyethyl)-2,4,8,10-tetraoxaspiro(5.5)undecane, and the compound represented by formula (4).

These compounds may be used alone, or two or more thereof may be used in combination.

[Chem. 4]

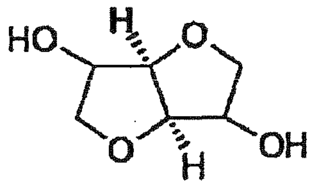

(2)

[Chem. 5]

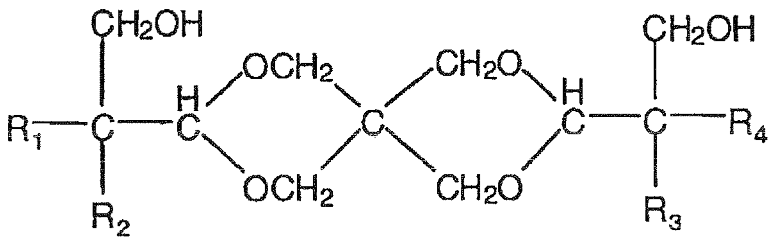

(3)

In the formula, $R_1$ to $R_4$ each independently are an alkyl group having 1-3 carbon atoms.

[Chem. 6]

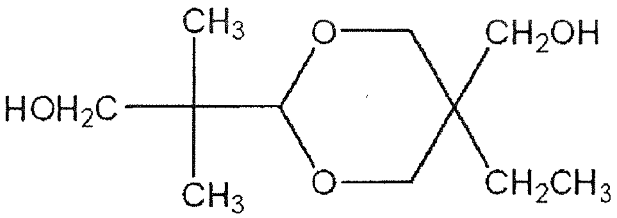

(4)

The dihydroxy compounds represented by the above formula (2) are ether diols which can be produced from glucides contained in biomass-derived starting materials. In particular, isosorbide can be produced at low cost by hydrogenating the D-glucose obtained from starch and then dehydrating the hydrogenation product, and this starting material is abundantly available. In view of these circumstances, isosorbide is most preferred.

The polycarbonate resin to be used as the layer A in the invention further contains structural units other than the structural unit derived from a dihydroxy compound having, as part of the structure thereof, a site represented by the above formula (1).

Use of the polycarbonate resin which further contains structural units other than the structural unit derived from a dihydroxy compound having a site represented by the above formula (1) makes it possible to attain improvements in, for example, processability, impact resistance, and mutual solubility with aromatic polycarbonate resins.

Preferred of the structural units other than the structural unit derived from a dihydroxy compound having a site represented by the above formula (1) are structural units derived from a dihydroxy compound having no aromatic ring.

More specific examples thereof include the structural units derived from aliphatic dihydroxy compounds which are described in International Publication No. 2004/111106 and the structural units derived from alicyclic dihydroxy compounds which are described in International Publication No. 2007/148604.

It is preferred that the polycarbonate resin should have structural units derived from at least one dihydroxy compound selected from ethylene glycol, 1,3-propanediol, 1,4-butanediol, 1,5-pentanediol, and 1,6-hexanediol, among the structure units derived from aliphatic dihydroxy compounds.

Preferred of the structural units derived from alicyclic dihydroxy compounds are structural units which contain a 5-membered cyclic structure or 6-membered cyclic structure. The 6-membered cyclic structure may be in a chair form or boat form which has been fixed by means of covalent bonding.

The incorporation of such structural units derived from an alicyclic dihydroxy compound of a 5-membered cyclic structure or 6-membered cyclic structure enables the resultant polycarbonate to have enhanced heat resistance. The number of the carbon atoms contained in the alicyclic dihydroxy compound is usually preferably 70 or less, more preferably

50 or less, even more preferably 30 or less.

Examples of the alicyclic dihydroxy compound including a 5-membered cyclic structure or 6-membered cyclic structure include the alicyclic dihydroxy compounds given in International Publication No. 2007/148604, which was cited above. Preferred examples among those include cyclohexanedimethanol, tricyclodecanedimethanol, adamantanediol, and pentacyclopentadecanedimethanol.

Of these, cyclohexanedimethanol or tricyclodecanedimethanol is most preferred from the standpoints of profitability, heat resistance, etc. These compounds may be used alone or in combination of two or more thereof.

Preferred of the cyclohexanedimethanols is 1,4-cyclohexanedimethanol, which is industrially available with ease.

The content of the structural unit derived from a dihydroxy compound having, as part of the structure thereof, a site represented by the above formula (1) in the polycarbonate resin to be used for forming the layer A is 35% by mole or higher, more preferably 40% by mole or higher, and is 90% by mole or less, more preferably 80% by mole or less.

By regulating the content thereof so as to be within that range, the polycarbonate resin is made to have a hardness which is intermediate between the hardness of aromatic polycarbonate resins and the hardness of acrylic resins. As a result, this laminate has far higher punchability than display cover bases having an acrylic resin layer disposed as a surface layer.

Specifically, when the content thereof is 90% by mole or less, this laminate has excellent surface hardness and heat resistance and can be inhibited from having reduced impact resistance. It is hence possible to avoid various troubles such as a decrease in yield in punching and damages which occur when display cover products are handled.

On the other hand, when the content thereof is 35% by mole or higher, this laminate has excellent impact resistance and punchability and can be inhibited from being reduced in surface hardness or heat resistance. In addition, it is possible to obtain a further enhanced surface hardness by disposing a hardcoat layer. This laminate hence is suitable for use in display cover applications and in transparent building material applications.

In the case where the transparency of the laminate and adhesion between the polycarbonate resin layer (layer A) and the layer of an aromatic polycarbonate resin (layer B) are thought to be especially important, it is preferred that the polycarbonate resin to be used for forming the layer A should be a copolymer comprising structural units derived from a dihydroxy compound having a site represented by the above formula (1) and structural units derived from an alicyclic dihydroxy compound. Preferred of such copolymers is a copolymer in which the content of the structural units derived from an alicyclic dihydroxy compound is 50% by mole or higher.

It is preferred that the polycarbonate resin for use in forming the layer A should be constituted of structural units derived from a dihydroxy compound having, as part of the structure thereof, a site represented by the above formula (1) and of structural units derived from an aliphatic dihydroxy compound and/or structural units derived from an alicyclic dihydroxy compound. The polycarbonate resin may further contain structural units derived from dihydroxy compounds other than those dihydroxy compounds, so long as this does not defeat the objects of the invention.

The glass transition temperature of the polycarbonate resin to be used for forming the layer A is measured by differential scanning calorimetry (DSC). The glass transition temperature thereof is usually preferably 45-155°C, more preferably 80-155°C, even more preferably 100-155°C. It is usually preferred that the polycarbonate resin should have a single glass transition temperature.

The glass transition temperature thereof can be regulated by suitably selecting the kinds and contents of the structural units derived from a dihydroxy compound having, as part of the structure thereof, a site represented by the above formula (1) and the structural units derived from an aliphatic dihydroxy compound and/or an alicyclic dihydroxy compound.

By regulating the glass transition temperature of the polycarbonate resin so as to be within that range, a laminate capable of sufficiently withstanding thermal environments which are supposed to be encountered during the transportation, storage, use, etc. of the laminate can be obtained.

The polycarbonate resin to be used for forming the layer A can be produced by polymerization techniques in general use, and either a phosgene method or a transesterification method which involves reaction with a carbonic diester may be used. Preferred of these is a transesterification method in which a dihydroxy compound having, as part of the structure thereof, a site represented by the above formula (1), an aliphatic and/or alicyclic dihydroxy compound, one or more other dihydroxy compounds which are used according to need, and a carbonic diester are reacted in the presence of a polymerization catalyst.

The transesterification method is a production method in which a dihydroxy compound having, as part of the structure thereof, a site represented by the above formula (1), an aliphatic and/or alicyclic dihydroxy compound, one or more other dihydroxy compounds which are used according to need, and a carbonic diester are subjected to a transesterification reaction in the presence of a basic catalyst and an acidic substance for neutralizing the basic catalyst.

Representative examples of the carbonic diester include diphenyl carbonate, ditolyl carbonate, bis(chlorophenyl) carbonate, di-m-cresyl carbonate, dinaphthyl carbonate, bis(biphenyl) carbonate, diethyl carbonate, dimethyl carbonate, dibutyl carbonate, and dicyclohexyl carbonate. It is especially preferred to use diphenyl carbonate among these.

The molecular weight of the thus-obtained polycarbonate resin to be used in the invention can be expressed in terms of reduced viscosity. The lower limit of the reduced viscosity thereof is preferably 0.20 dL/g or higher, more preferably 0.30 dL/g or higher, even more preferably 0.35 dL/g or higher, and the upper limit of the reduced viscosity thereof is preferably 1.20 dL/g or less, more preferably 1.00 dL/g or less, even more preferably 0.80 dL/g or less.

In the case where the reduced viscosity of the polycarbonate resin is too low, there is a possibility that this resin might give molded articles having low mechanical strength. In the case where the reduced viscosity thereof is too high, there is a tendency that this resin shows reduced flowability during molding, resulting in decreases in productivity and moldability.

The reduced viscosity of a polycarbonate resin is determined in the following manner. A polycarbonate solution having a polycarbonate concentration precisely adjusted to 0.60 g/dL is prepared using methylene chloride as a solvent, and this solution is examined at a temperature of 20.0±0.1°C using automatic viscometer Type DT-504, manufactured by Chuo Rika Corp., which employs an Ubbelohde viscometer.

The relative viscosity $\eta_{rel}$ is determined from the flow-down time of the solvent $t_0$ and the flow-down time of the solution t using the following equation.

$$\eta_{rel} = t/t_0$$

From the relative viscosity $\eta_{rel}$, the specific viscosity $\eta_{sp}$ is determined using the following equation.

$$\eta_{sp} = (\eta-\eta_0)/\eta_0 = \eta_{rel}-1$$

The specific viscosity $\eta_{sp}$ is divided by the concentration c (g/dL) to determine the reduced viscosity (conversion viscosity) $\eta_{red}$ using the following equation.

$$\eta_{red} = \eta_{sp}/c$$

The polycarbonate resin to be used for forming the layer A has an advantage that since the resin shows substantially no light absorption in a near-ultraviolet to visible-light wavelength region, the resin does not suffer yellowing deterioration with the lapse of time even when an ultraviolet absorber has not been especially incorporated thereinto. However, an ultraviolet absorber can be incorporated into the layer A in a minimum necessary amount in order to inhibit the layer B from suffering yellowing deterioration due to the ultraviolet rays that have passed through the layer A and are absorbed by the layer B.

As the ultraviolet absorber, use can be made of known ultraviolet absorbers, e.g., various commercial ultraviolet absorbers, without particular limitations. Suitable of these are ultraviolet absorbers which are usually added to known aromatic polycarbonate resins. Examples thereof include benzotriazole-based ultraviolet absorbers such as 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, and 2,2'-methylenebis(4-cumyl-6-benzotriazolephenyl); benzoxazine-based ultraviolet absorbers such as 2,2'-p-phenylenebis(1,3-benzoxazin-4-one); and hydroxyphenyltriazine-based ultraviolet absorbers such as 2-(4,6-diphenyl-1,3,5-triazin-2-yl)-5-(hexyl)oxyphenol.

With respect to the melting points of ultraviolet absorbers, ultraviolet absorbers having a melting point in the range of 120-250°C are especially preferred. By using an ultraviolet absorber having a melting point of 120°C or higher, the molded object is prevented from suffering surface fouling due to the bleeding phenomenon in which the ultraviolet absorber migrates to the molding surface with the lapse of time, or in the case of molding with a die or metal rolls, these members are prevented from being fouled by bleeding. Namely, it becomes easy to reduce and mitigate the surface dulling of molded articles.

More specifically, it is preferred to use benzotriazole-based ultraviolet absorbers such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)]phenol, and 2-(2-hydroxy-3,5-dicumylphenyl)benzotriazole and hydroxyphenyltriazine-based ultraviolet absorbers such as 2-(4,6-diphenyl-1,3,5-triazin-2-yl)-5-(hexyl)oxyphenol.

Especially preferred of these are 2-(2-hydroxy-3,5-dicumylphenyl)benzotriazole, 2,2-methylenebis[4-(1,1,3,3-tetramethylbutyl)-6-(2H-benzotriazol-2-yl)]phenol, and 2-(4,6-diphenyl-1,3,5-triazin-2-yl)-5-(hexyl)oxyphenol. One of these ultraviolet absorbers may be used alone, or two or more thereof may be used in combination. With respect to the

addition amount of an ultraviolet absorber, the amount of the ultraviolet absorber to be added per 100 parts by weight of the polycarbonate resin to be used for the layer A is preferably 0.0001-1 part by weight, more preferably 0.0005-0.5 parts by weight, even more preferably 0.001-0.2 parts by weight.

By adding an ultraviolet absorber in an amount within that range, the weatherability of the laminate of the invention can be improved while preventing the ultraviolet absorber from bleeding and migrating to the surface of the layer A and preventing the layer A from decreasing in mechanical property.

Examples of commercially available ultraviolet absorbers include "Tinuvin 1577FF", manufactured by BASF A.G.

When a transparent building material supposed to be used in outdoor applications is to be produced using an aromatic polycarbonate resin, use is usually made of a laminate obtained by laminating an extremely thin surface layer of an aromatic polycarbonate resin into which an ultraviolet absorber has been incorporated in a high concentration to a base layer of an aromatic polycarbonate resin which contains an ultraviolet absorber in a low concentration or contains no ultraviolet absorber, for the purpose of reducing the amount of the ultraviolet absorber to be incorporated.

However, when the laminate of the invention is used so that the layer A is the surface layer on the side where solar radiation strikes or when the laminate of the invention has the layer A disposed as each surface layer, then the amount of the ultraviolet absorber to be added thereto can be greatly reduced.

The layer A in the invention may contain a transparent colorant, bluing agent, antioxidant, heat stabilizer, and the like as optional additive ingredients so long as such additive ingredients do not depart from the essence of the invention.

By regulating the comonomer ingredients for the layer A according to the invention, the layer A can be produced as any of layers ranging from a layer which has a high surface hardness to a layer which has a relatively low surface hardness but has excellent impact resistance. A plurality of layers differing in composition or blending ratio may be superposed and used as the layer A.

The thickness of the layer A in the laminate of the invention is preferably 30 μm or more, more preferably 40 μm or more. By regulating the thickness of the layer A to 30 μm or more, not only the surface hardness of the laminate also can be improved but also ultraviolet rays can be inhibited from readily reaching the layer B as the base when an ultraviolet absorber has been incorporated into the layer A.

There is no particular upper limit on the thickness of the layer A. However, the thickness thereof is preferably 100 μm or less, more preferably 80 μm or less. By regulating the thickness of the layer A to 100 μm or less, punchability and impact resistance can be sufficiently ensured while maintaining the surface hardness. In addition, it is also possible to reduce the thickness and weight of the laminate.

The layer A according to the invention may be produced as a single layer and thereafter laminated to the layer of an aromatic polycarbonate resin (layer B) which will be described later. It is, however, preferred to produce the layer A by a method in which the layer A is formed by coextrusion with the layer B, from the standpoints of process simplification, yield improvement, etc.

In the case where the layer A is produced as a single layer, methods for the production are not particularly limited. For example, use can be made of known techniques such as T-die casting and calendering.

<Aromatic Polycarbonate Resin Layer (Layer B)>

The laminate of the invention comprises a layer of an aromatic polycarbonate resin (layer B). The aromatic polycarbonate resin to be used for forming the layer B may be either a homopolymer or a copolymer. The aromatic polycarbonate resin may have a branched structure or a linear structure, or may be a mixture of a branched structure and a linear structure.

For producing the aromatic polycarbonate resin to be used in the invention, use may be made of any of known techniques such as, for example, a phosgene method, a transesterification method, and a pyridine method. A process for producing the aromatic polycarbonate resin by a transesterification method is explained below as an example.

The transesterification method is a production method in which a dihydric phenol and a carbonic diester are subjected to melt transesterification polycondensation in the presence of a basic catalyst and an acidic substance for neutralizing the basic catalyst.

Representative examples of the dihydric phenol include bisphenols. In particular, it is preferred to use 2,2-bis(4-hydroxyphenyl)propane, i.e., bisphenol A. Part or the whole of the bisphenol A may be replaced with one or more other dihydric phenols.

Examples of the other dihydric phenols include hydroquinone, 4,4-dihydroxydiphenyl, bis(4-hydroxyphenyl)alkanes such as bis(4-hydroxyphenyl)methane and 1,1-bis(4-hydroxyphenyl)ethane, bis(4-hydroxyphenyl)cycloalkanes such as 1,1-bis(4-hydroxyphenyl)cyclohexane, compounds such as bis(4-hydroxyphenyl) sulfide, bis(4-hydroxyphenyl) sulfone, bis(4-hydroxyphenyl) sulfoxide, and bis(4-hydroxyphenyl) ether, alkylated bisphenols such as 2,2-bis(3-methyl-4-hydroxyphenyl)propane and 2,2-bis(3,5-dimethyl-4-hydroxyphenyl)propane, and halogenated bisphenols such as 2,2-bis(3,5-dibromo-4-hydroxyphenyl)propane and 2,2-bis(3,5-dichloro-4-hydroxyphenyl)propane.

Examples of the carbonic diester include diphenyl carbonate, ditolyl carbonate, bis(chlorophenyl) carbonate,

di-m-cresyl carbonate, dinaphthyl carbonate, bis(biphenyl) carbonate, diethyl carbonate, dimethyl carbonate, dibutyl carbonate, and dicyclohexyl carbonate. It is especially preferred to use diphenyl carbonate among these.

From the standpoint of a balance between mechanical properties and moldability, the viscosity-average molecular weight (Mv) of the aromatic polycarbonate resin to be used for forming the layer B is usually preferably 8,000-30,000, more preferably 10,000-25,000.

The viscosity-average molecular weight (Mv) is determined by preparing a methylene chloride solution of a sample of the polycarbonate resin (concentration, 0.6 g/dL), measuring the $\eta_{sp}$ thereof at 20°C with an Ubbelohde viscometer, and calculating the molecular weight using the following equations (I) and (II).

$$\eta_{sp}/C = [\eta]\times(1+0.28\eta_{sp}) \qquad (I)$$

$$[\eta] = 1.23\times10^{-4}\times(Mv)^{0.83} \qquad (II)$$

In equation (I), $\eta_{sp}$ is the specific viscosity of the polycarbonate resin sample measured at 20°C in methylene chloride, and C is the concentration of this methylene chloride solution. As the methylene chloride solution is used a solution in which the concentration of the polycarbonate resin sample is 0.6 g/dL.

The reduced viscosity of the aromatic polycarbonate resin is determined in the same manner as for the polycarbonate resin to be used for forming the layer A, and is usually preferably 0.23-0.72 dL/g, more preferably 0.27-0.61 dL/g.

The aromatic polycarbonate resin in the invention is an aromatic polycarbonate resin in which at least 50% by mole (preferably at least 70% by mole, more preferably at least 90% by mole) of the structural units each derived from a dihydric phenol have one or more aromatic rings, and the aromatic rings may have substituents.

When a polycarbonate resin falls under two or more of the polycarbonate resin to be used for forming the layer A and the aromatic polycarbonate resin to be used for forming the layer B, then this resin is considered to be included in the polycarbonate resin for forming the layer A. In the invention, one aromatic polycarbonate resin may be used alone, or a mixture of two or more aromatic polycarbonate resins may be used.

When the resin for constituting the layer B has a processing temperature which is considerably different from the processing temperature of the resin for constituting the layer A and when it is necessary to lower the processing temperature of the resin for constituting the layer B, then the aromatic polycarbonate resin may be mixed with a resin which has a low glass transition temperature so that even when this resin is melt-kneaded together with the aromatic polycarbonate resin, the visible-light-transmitting properties are maintained.

Examples of the resin include "Skygreen J2003", manufactured by SK Chemicals Co., Ltd., and "Eastar Copolymer 6763", manufactured by Eastman Chemical Company. It is usually preferred that these ingredients should be incorporated in an amount in the range of 0-30% by weight based on all resins for constituting the layer B.

The term "visible-light-transmitting properties" herein means that the laminate is colorless and transparent when visually examined.

Various additives in general use may be added to the aromatic polycarbonate resin to be used for forming the layer B, so long as the additives do not depart from the essence of the invention. Examples thereof include antioxidants, coloring inhibitors, ultraviolet absorbers, light-diffusing agents, flame retardants, release agents, lubricants, antistatic agents, and dyes and pigments.

<Process for Producing the Laminate of the Invention>

Processes for producing the laminate of the invention by laminating the layer A and the layer B to each other are not particularly limited. However, a more suitable process is to form the two layers by coextrusion as stated above. Specifically, use is made of an apparatus equipped with a primary extruder which feeds the resin for constituting the layer B and a secondary extruder which feeds the resin for constituting the layer A.

The primary extruder is set at a temperature of usually preferably 220-300°C, more preferably 220-280°C. The secondary extruder is set at a temperature of usually preferably 220-280°C, more preferably 220-250°C.

For the coextrusion, use can be made of known methods such as, for example, a multi-manifold method and a feed block method. The die temperature is usually preferably 220-300°C, more preferably 220-280°C. The casting roll has a temperature of usually preferably 100-190°C, more preferably 100-170°C. The rolls may be disposed either in a vertical arrangement or in a horizontal arrangement.

The configuration of the laminate of the invention is not particularly limited so long as the laminate comprises at least one layer A and at least one layer B laminated thereto. For example, a layer A may be laminated to each surface of a layer B to configure a laminate composed of three layers of two kinds, i.e., an A/B/A type laminate. In this case also,

it is preferred to produce the laminate by a method in which the two kinds of layers are formed by coextrusion. This laminate may be configured so as to have a symmetrical structure by making the two surface layers A have the same thickness. This configuration is suitable because the possibility that the laminate might warp or twist in the environment can be reduced.

<Hardcoating Treatment and Methods therefor>

Since the layer A has a higher surface hardness than conventional aromatic polycarbonate resins, the laminate of the invention as such can be used in various applications such as transparent building materials and the small display windows of electrical/electronic appliances, so long as an especially high surface hardness is not required.

In the case where the laminate of the invention is to be used in applications where abrasion resistance is required, such as display covers for cell phones, touch panels, and the like which are frequently touched with the hand, the surface of at least the front-side layer A can be subjected to a hardcoating treatment.

Methods for the hardcoating treatment generally include heat curing and ultraviolet curing. In the case of heat curing, use of a hardcoating material such as, for example, a polyorganosiloxane or a crosslinkable acrylic is suitable. In the case of ultraviolet curing, use of a hardcoating material obtained by adding a photopolymerization initiator as a curing catalyst to a combination of a plurality of mono- or polyfunctional acrylate monomers or oligomers is suitable.

Such hardcoating materials are on the market as hardcoating materials for acrylic resins or polycarbonate resins, and suitable ones are selected while taking account of hardness, handleability, etc. Furthermore, an antifoamer, leveling agent, thickener, antistatic agent, antifogging agent, and the like may be suitably added according to need.

There are the cases where the laminate which has an asymmetrical laminate structure or in which the front-side surface only has undergone a hardcoating treatment suffers warpage or twisting, making it difficult to incorporate this laminate in a flat plate state into products. This trouble can be mitigated by subjecting the back-side surface also to a hardcoating treatment. This method further has an advantage that the possibility of accidentally forming a scratch in the back-side surface when the laminate is handled is lessened. It is preferred that the hardcoating treatment of the back-side surface should be conducted in the same manner as the hardcoating treatment of the front-side surface.

For the hardcoating treatment, use can be made of dipping, pouring, spraying, a roll coater, a flow coater, or the like. Besides these, use may be made of a method in which after film formation by extrusion, a hardcoating material is continuously applied to the web and cured in the line.

Preferred are such in-line coating methods. A more preferred is an in-line coating method in which a solvent-free ultraviolet-curable hardcoating material is used. This selection is expected to bring about process simplification and effects due to the nonuse of solvent, such as a reduction in environmental burden and a reduction in the cost of energy for solvent volatilization.

With respect to the thickness of the hardcoat layer in the laminate of the invention, the lower limit thereof is preferably 1 $\mu$m or more, more preferably 2 $\mu$m or more, in terms of cured-layer thickness. By regulating the lower limit thereof to such a value, the surface hardness of the laminate can be sufficiently heightened. On the other hand, the upper limit thereof is preferably 20 $\mu$m or less, more preferably 15 $\mu$m or less. By regulating the upper limit thereof to such a value, the surface hardness can be enhanced without lowering impact resistance, punchability, etc.

<Antireflection Layer and Antifouling Layer>

An antireflection layer or an antifouling layer can be disposed on the surface of the front-side layer A of the laminate of the invention, so long as the formation thereof does not depart from the essence of the invention. By disposing these layers, image visibility can be further improved when the laminate of the invention is used especially as the display covers of image display devices which are used outdoors.

The antireflection layer or antifouling layer may be disposed by superposing a layer having the desired function. Alternatively, the antireflection layer and the antifouling layer may be disposed by superposing a layer which combines the two functions.

The antireflection layer is a layer which not only enhances the function of preventing reflection but also enhances wear resistance, antistatic function, and water repellency. The antireflection layer can be disposed by applying a fluid prepared by mixing conventionally known materials, e.g., an inorganic substance (optical filler), a binder resin, additives, and a solvent.

The antifouling layer is a layer which enhances antifouling properties. For this layer, a conventionally known material such as, for example, a fluorinated silane coupling agent can be used.

The antireflection layer or the antifouling layer can be formed by coating in the same manner as for the hardcoat layer. Methods for forming the layers are not limited to the coating, and use may be made of a method in which a film, a sheet, or a similar shape is formed beforehand and laminated optionally using a known adhesive according to need. In the case of a thermoplastic resin, the layer can be formed by coextrusion with the layer A and layer B.

<Printed Layer>

A printed layer can be further disposed in the laminate of the invention. The printed layer may be formed by known printing techniques such as, for example, gravure printing, offset printing, and screen printing.

The printed layer may have any desired design such as, for example, the grain of stone, the grain of wood, a geometrical pattern, or an abstract pattern. The printed layer may be a layer formed by partial printing or by solid printing, or may be composed of a layer formed by partial printing and a layer formed by solid printing.

The printed layer may be formed by printing on a surface of either the layer A or the layer B of the laminate of the invention. In the case where the hardcoat layer, antireflection layer, or antifouling layer is to be disposed as an outermost layer of the laminate, it is preferred to dispose the printed layer by printing in a step which precedes the formation of the outermost layer. Furthermore, it is possible to dispose the printed layer as the antireflection layer or antifouling layer.

The printing ink to be used for forming the printed layer is not particularly limited in the pigment and solvent contained therein, and pigments and solvents which are in general use can be applied thereto. In particular, a printing ink which contains an acrylic resin or urethane resin is suitable because even when the printed layer is disposed therewith, the laminate of the invention can be produced without raising troubles such as, for example, delamination.

The overall thickness of the laminate of the invention is preferably 0.15 mm or more, more preferably 0.2 mm or more, and is preferably 3 mm or less, more preferably 2 mm or less. By regulating the overall thickness thereof so as to be within that range, the laminate is rendered easily applicable as a substitute for the aromatic polycarbonate resin sheets in current use.

The laminate of the invention is a laminate having an excellent surface hardness. The pencil hardness thereof, which is an index to the surface hardness, is preferably F or higher, more preferably H or higher. By imparting a pencil hardness within that range, a laminate which has excellent abrasion resistance and is suitable for use in applications such as display covers can be provided.

A pencil hardness within that range can be attained, for example, by regulating the thickness of the layer A, the thickness of the functional layer, or the composition of the polycarbonate resin so as to be within the preferred range shown herein.

The laminate of the invention is a laminate having excellent impact resistance. The fracture energy (kgf·mm) thereof, which is an index to the impact resistance, is preferably 200 kgf·mm or more, more preferably 500 kgf·mm or more, even more preferably 800 kgf·mm or more. By imparting a fracture energy within that range, a laminate which has excellent punchability during the production of, for example, display covers or the like can be provided.

Punchability can be evaluated by visually examining the cut surfaces of punched test pieces for surface roughness, cracks, etc., as will be described later.

A fracture energy within that range can be attained, for example, by regulating the thickness of the layer A, the composition of the polycarbonate resin, or the overall thickness of the laminate of the invention so as to be within the preferred range shown herein.

The laminate of the invention is a laminate which has excellent yellowing deterioration resistance even when the amount of the ultraviolet absorber added to the resin composition constituting the layer A is small. The color difference thereof, which is an index to the yellowing deterioration resistance, is preferably 1.0 or less, more preferably 0.9 or less, even more preferably 0.8 or less. By imparting a color difference within that range, a laminate which is inhibited from decreasing in total light transmittance, increasing in haze, or deteriorating in appearance can be provided.

A color difference within that range can be attained, for example, by adding an ultraviolet absorber in a minimal amount which preferably is 1.0% by weight or more per 100% by weight of the resin composition for constituting the layer A or by regulating the thickness of the layer A so as to be within the preferred range shown herein.

<Applications of the Laminate of the Invention>

The laminate of the invention may be produced in the form of a film, sheet, plate, etc. by the production process described above. The laminate of the invention thus formed is excellent in terms of transparency, surface hardness, impact resistance, punchability, and yellowing deterioration resistance.

Consequently, the laminate of the invention can be used in applications such as, for example, building materials, interior parts, transparent sheets such as display covers, sheets for resin-coated metal sheets, sheets for forming (vacuum or pressure forming, hot-press forming, etc.), colored plates, transparent plates, shrink films, shrink labels, shrink tubes, automotive interior materials, members for domestic electrical appliances, and members for OA appliances, although applications thereof are not particularly limited.

The laminate of the invention can be used as a sheet for forming and subjected to various kinds of secondary processing. The laminate can be thermoformed to give a thermoformed object. Methods for the thermoforming are not particularly limited, and use can be made of known forming techniques such as, for example, blister forming, vacuum

forming, and pressure forming.

The general-purpose aromatic polycarbonate resins in general use as thermoforming materials have problems that the resins have a low surface hardness and are susceptible to scratching and that the resins have a high glass transition temperature and hence are not easy to form. In the case of thermoforming applications which involve printing, there are problems due to poor solvent resistance, such as, for example, a problem that cracks generate due to the printing ink.

In contrast, the laminate employing the polycarbonate resin according to the invention can be easily thermoformed because this polycarbonate resin can be made to have a lower glass transition temperature than the aromatic polycarbonate resins. Thus, a sheet which combines heat resistance and suitability for secondary processing can be obtained.

Furthermore, the laminate of the invention usually has no aromatic ring in the structure thereof or has aromatic rings in a lower content than the aromatic polycarbonate resins. Because of this, the laminate of the invention is less apt to undergo ultraviolet absorption by aromatic rings and to suffer resin deterioration due to the ultraviolet absorption. The laminate hence has excellent weatherability and is expected to have improved surface hardness and improved solvent resistance.

Consequently, the laminate of the invention can be inhibited from deteriorating especially when used outdoors. When a layer of a material which is cured with ultraviolet rays, such as, for example, a hardcoat layer of the ultraviolet-curable type, is formed on a surface thereof, the influence of the ultraviolet rays can be diminished. The laminate is suitable also for thermoforming applications in which the laminate is used after being printed.

Moreover, since the laminate of the invention is easy to thermoform, the laminate can be deep-drawn and is suitable also for use in thermoforming for forming, for example, a shape required to have a deep-drawing height or a special shape.

Applications of the thermoformed object also are not particularly limited. Examples of applications in which printability, weatherability, and heat resistance are required include imitation cans (so-called dummy cans) to be used in automatic vending machines and advertising display panels equipped with a backlight. Examples of applications in which suitability for deep drawing include food-packaging materials, e.g., egg packages, and press-through packages (PTP) for medicines.

Furthermore, a backing layer may be formed on the thermoformed object by injection-molding a molten resin. Thus, a molded object having excellent design attractiveness can be produced by in-mold integration. In this case, a printed layer may be formed on one surface of the thermoformed object and the molten resin is injection-molded on the printed-surface side. Thus, the printed layer can be protected.

Besides being produced by first conducting secondary processing by thermoforming and then injection-molding a molten resin, that molded object may be obtained by simultaneously conducting thermoforming and injection molding in a mold. Alternatively, a molded object can be obtained by in-mold integration in one step using the laminate in a sheet form. Examples of applications of such molded objects produced by in-mold integration include automotive interior materials, members for domestic electrical appliances, and members for OA appliances.

## Examples

The invention will be explained below in more detail by reference to Examples, but the invention should not be construed as being limited by the following Examples.

The resins used in the Examples are as follows.

(A-1 and A-2) Polycarbonate resins for constituting the layer A according to the invention, the resins each containing structural units derived from isosorbide and structural units derived from 1,4-cyclohexanedimethanol, in the respective amounts in mol% as shown in Table 1. (Glass transition temperature of A-1, 120°C; reduced viscosity of A-1, 0.56 dL/g; glass transition temperature of A-2, 101°C; reduced viscosity of A-2, 0.57 dL/g)

(B-1) "Iupilon S3000", manufactured by Mitsubishi Engineering-Plastics Corp.; an aromatic polycarbonate resin for constituting the layer B according to the invention. (Glass transition temperature, 150°C; reduced viscosity, 0.49 dL/g; viscosity-average molecular weight, 20,000)

On the other hand, in the Comparative Examples, the following resin was used in place of A-1 or A-2 as a resin for constituting the layer A according to the invention.

(C-1) "Acrypet VH5", manufactured by Mitsubishi Rayon Co., Ltd., which is an acrylic resin.

[Table 1]

Table 1

| | A-1 | A-2 |
|---|---|---|
| Structural units derived from isosorbide, mol% | 70 | 50 |
| Structural units derived from 1,4-cyclohexanedimethanol, mol% | 30 | 50 |

In the Examples, the following properties were evaluated and examined by the following methods. The results thereof are shown in Table 2 to Table 4.

1) Surface Hardness (Pencil Hardness)

In accordance with JIS K5400, a line was drawn with a pencil on the surface of a laminate cut into a size of 80 mm × 60 mm, in a thermostatic room having an atmosphere temperature of 23 degrees while holding the pencil at an angle of 45 degrees and applying a load of 1 kg thereto. The state of the surface was visually evaluated. The laminates having a pencil hardness of F or higher were rated as "○" (acceptable). The laminates having a pencil hardness lower than HB were rated as "X".

2) Impact Resistance (Fracture Energy)

High-speed impact tester Hydroshot ("Type HTM-1", manufactured by Shimadzu Corp.) was used. A sheet cut into a size having a length dimension of 100 mm and a width dimension of 100 mm was used as a sample and fixed with the clamp. At a temperature of 23°C, an impactor having a diameter of 1/2 inch was dropped onto the center of the sheet at a falling speed of 3 m/sec to make an impact thereon. The fracture energy (kgf·mm) which was required for the sample to break was measured.

The samples which had a fracture energy of 200 kgf·mm or higher were rated as acceptable. Furthermore, the surfaces formed by the breakage were visually examined and evaluated. The samples which had undergone a ductile deformation were rated as "○", the samples which had undergone a slightly brittle deformation with no considerable scattering of chips were rated as "Δ", and the samples which had undergone brittle fracture with scattering of many chips were rated as "×".

3) Punchability

Dumbbell No.1 specimens were punched out of a sheet in accordance with JIS K6251. Ten specimens were thus punched out and each examined for troubles such as cut-surface roughness or cracks. The samples in which such troubles were observed in eight or more specimens among the ten were rated as "×", the samples in which three to seven specimens had such troubles were rated as "Δ", and the samples in which such troubles were observed in up to two specimens or in no specimen were rated as "○".

4) Yellowing Deterioration Resistance (Color Difference)

An accelerated weathering test was conducted using an Erichsen tester as provided for in JIS B7729, which is mentioned in JIS K6744, and using a sunshine weatherometer as a tester for accelerated weathering (manufactured by Suga Test Instruments Co., Ltd.). The conditions included a black panel temperature of 63°C and a cycle time of 120 minutes (irradiation, 102 minutes; spraying, 18 minutes). The difference in color between the test piece which had undergone 600-hour exposure and the test piece which had undergone no exposure was measured with color and color-difference meter CR-200 (manufactured by Minolta Co., Ltd.). The samples in which the color difference was 1.0 or less were rated as good, and the samples in which the color difference was larger than 1.0 were rated as poor.

(Production of Laminates)

Laminates were formed by coextrusion while feeding the resin for constituting a layer B (B-1) from a primary extruder at a set temperature of 260°C and feeding a resin for constituting a layer A (A-1, A-2, or C-1) from a secondary extruder at a set temperature of 230°C and using a feed block at a die head temperature of 260°C and a casting roll

temperature of 110°C. The layer configurations and layer thicknesses of the resultant laminates are shown in Table 2 to Table 4.

(Hardcoat Layer)

That surface of a laminate which was to be coated with a hardcoat layer was coated with an acrylic hardcoat ("Seika-Beam EXF001W", manufactured by Dainichiseika Co., Ltd.) in a thickness of 5 μm in terms of cured-film thickness, and the acrylic hardcoat applied was irradiated with ultraviolet rays and thereby cured. Thus, a hardcoat layer (D-1) was formed.

(Antireflection Layer and Antifouling Layer)

A film ("ReaLook #8701 UV-S", manufactured by Nippon Oil & Fats Co., Ltd.) obtained by forming an acrylic adhesive layer on one surface of an unstretched triacetylcellulose (TAC) film to which antireflection properties and antifouling properties had been imparted was laminated to that surface of a laminate on which an antireflection layer and an antifouling layer were to be formed, so that the adhesive layer faced the laminate. Thus, an antireflection and antifouling layer (D-2) was formed.

Laminates having the layer configurations and layer thicknesses shown in Table 2 and Table 3 were produced, and were subjected to the tests for evaluating pencil hardness, impact resistance, and punchability.

[Table 2]

Table 2

| | | Example 1 | | Example 2 | | Example 3 | | Example 4 | | Example 5 | | Example 6 | | Example 7 | |
|---|---|---|---|---|---|---|---|---|---|---|---|---|---|---|---|
| Layer configuration (each numeral indicates thickness; unit, μm) | Front side | | | | | D-1 | 5 | D-2 | 80 | | | D-1 | 5 | D-1 | 5 |
| | ↑ | A-1 | 50 | A-2 | 50 | A-1 | 50 | A-1 | 50 | A-1 | 50 | A-1 | 50 | A-1 | 50 |
| | I | B-1 | 400 | B-1 | 400 | B-1 | 400 | B-1 | 400 | B-1 | 400 | B-1 | 400 | B-1 | 250 |
| | ↓ | | | | | | | | | A-1 | 50 | A-1 | 50 | A-1 | 50 |
| | Back side | | | | | D-1 | 5 | | | | | D-1 | 5 | D-1 | 5 |
| Pencil hardness | - | H | ○ | F | ○ | 2H | ○ | 2H | ○ | H | ○ | 2H | ○ | 2H | ○ |
| Impact resistance | kgf·mm | 1052 | ○ | 1079 | ○ | 978 | ○ | 936 | ○ | 926 | ○ | 919 | ○ | 1197 | ○ |
| Punchability | - | ○ | | ○ | | ○ | | ○ | | ○ | | ○ | | ○ | |

[Table 3]

Table 3

| | | Comparative Example 1 | | Comparative Example 2 | | Comparative Example 3 | | Comparative Example 4 | | Comparative Example 5 | | Comparative Example 6 | | Comparative Example 7 | |
|---|---|---|---|---|---|---|---|---|---|---|---|---|---|---|---|
| Layer configuration (each numeral indicates thickness; unit, μm) | Front side | | | D-1 | 5 | | | D-1 | 5 | | | D-1 | 5 | | |
| | ↑ | | | | | | | | | C-1 | 50 | C-1 | 50 | C-1 | 50 |
| | I | B-1 | 400 | B-1 | 400 | C-1 | 400 | C-1 | 400 | B-1 | 400 | B-1 | 400 | B-1 | 400 |
| | ↓ | | | | | | | | | | | | | C-1 | 50 |
| | Back side | | | D-1 | 5 | | | D-1 | 5 | | | D-1 | 5 | | |
| Pencil hardness | - | 2B | × | HB | × | 2H | ○ | 4H | ○ | 2H | ○ | 4H | ○ | 4H | ○ |
| Impact resistance | kgf·mm | 1251 | ○ | 1193 | ○ | 160 | × | 148 | × | 42 | × | 43 | × | 42 | × |
| Punch ability | - | ○ | | ○ | | ○ | | × | | × | | × | | × | |

As demonstrated by the Examples shown in Table 2, the laminates of the invention were able to attain a satisfactory balance among the various properties required of display covers and the like, i.e., surface hardness, impact resistance, and punchability, and were further able to accommodate the thickness reduction. In contrast, the Comparative Examples shown in Table 3 were inferior to the Examples in any of surface hardness, impact resistance, and punchability.

Subsequently, a resin for surface layer formation was melt-kneaded beforehand together with trade name "Tinuvin 1577FF", manufactured by BASF A.G., as an ultraviolet absorber, the amount of the ultraviolet absorber per 100% by weight the resin being shown in Table 4. The resultant mixture as a resin for surface layer formation and the aromatic polycarbonate resin (B-1) as a resin for base formation were subjected to coextrusion molding so as to result in a surface layer thickness of 80 μm and a base layer thickness of 1.8 mm. This laminate was subjected to the weathering test so that the surface layer side was irradiated. The results thereof are shown in Table 4.

[Table 4]

Table 4

| | Example 8 | Example 9 | Example 10 | Comparative Example 8 |
|---|---|---|---|---|
| Surface layer | A-1 | A-1 | A-1 | B-1 |
| Base layer | B-1 | B-1 | B-1 | B-1 |
| Amount of ultraviolet absorber added, wt% | 1.0 | 1.5 | 2.0 | 2.0 |
| Color difference | 0.97 | 0.90 | 0.65 | 2.65 |

As shown in Table 4, it was found that the laminates of the Examples, in which a layer A was used as a surface layer, exhibited excellent yellowing deterioration resistance even when the amounts of the ultraviolet absorber added were small, and were suitable also for applications involving long-term outdoor use such as transparent building materials. In contrast, the laminate of the Comparative Example, in which a layer B was used as a surface layer, tended to show a larger color difference because the amount of the ultraviolet absorber, which was the same as in an Example, was insufficient therefor.

From the results given above, the laminates of the invention were found to be excellent in terms of surface hardness, impact resistance, punchability, and yellowing deterioration resistance.

## Claims

1. A laminate **characterized by** laminating a layer A of a polycarbonate resin which contains a structural unit derived from a dihydroxy compound having, as part of the structure thereof, a site represented by the following formula (1), and a structural unit other than the structural unit derived from said dihydroxy compound to a layer B of an aromatic polycarbonate resin,

[Chem. 1]

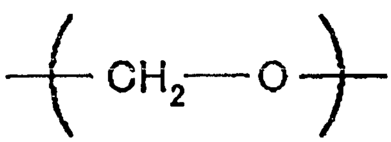

(1)

wherein the dihydroxy compound is a dihydroxy compound represented by the following formula (2), and

[Chem. 2]

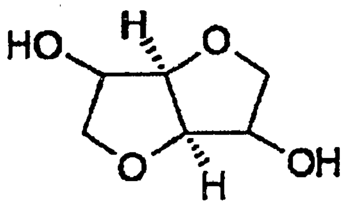

(2)

wherein a content of the structural unit derived from the dihydroxy compound represented by the above formula (1) in the polycarbonate resin to be used for forming the layer A is 35% by mole or higher and 90% by mole or less.

2. The laminate as claimed in claim 1, wherein the glass transition temperature of the polycarbonate resin to be used for forming the layer A is 45 to 155°C.

3. The laminate as claimed in claim 1, wherein a viscosity-average molecular weight (Mv) of the aromatic polycarbonate resin to be used for forming the layer B is 8,000 to 30,000.

4. The laminate as claimed in claim 1, wherein a reduced viscosity of the aromatic polycarbonate resin is 0.23 dL/g to 0.72 dL/g.

5. The laminate as claimed in any one of claims 1 to 4 which has the layer A laminated to each of both surfaces of the layer B.

6. The laminate as claimed in any one of claims 1 to 5 which has one or more functional layers selected from a hardcoat layer, an antireflection layer, and an antifouling layer, the functional layers having been disposed on at least one of both surfaces of the laminate.

7. The laminate as claimed in any one of claims 1 to 6 which further has a printed layer.

8. The laminate as claimed in any one of claims 1 to 7 wherein the layer A has an overall thickness of 30-100 $\mu$m.

9. The laminate as claimed in any one of claims 1 to 8 which has an overall thickness of 0.15-3 mm.

10. A display cover obtained by processing the laminate according to any one of claims 1 to 9 by punching.

11. A building material member obtained by processing the laminate according to any one of claims 1 to 9.

12. A thermoformed object obtained by thermoforming the laminate according to any one of claims 1 to 9.

13. An imitation can for automatic vending machines which comprises the thermoformed object according to claim 12.

14. A press-through package which comprises the thermoformed object according to claim 12.

15. A molded object produced by in-mold integration, which has been obtained by forming a backing layer on a surface of the thermoformed object according to claim 12 by injection-molding a molten resin.

**Patentansprüche**

1. Ein Laminat, **gekennzeichnet durch** Laminieren einer Schicht A aus einem Polycarbonatharz, das eine Struktureinheit, abgeleitet von einer Dihydroxyverbindung, welche als Teil der Struktureinheit eine durch die folgende Formel (1) dargestellte Stelle aufweist, und eine von der Struktureinheit, abgeleitet von der Dihydroxyverbindung, verschiedene Struktureinheit enthält, auf eine Schicht B aus einem aromatischen Polycarbonatharz,

[Chem. 1]

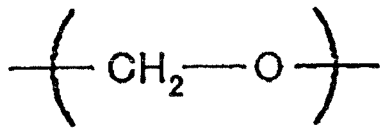

(1)

wobei die Dihydroxyverbindung eine Dihydroxyverbindung, dargestellt durch die folgende Formel (2), ist und

[Chem. 2]

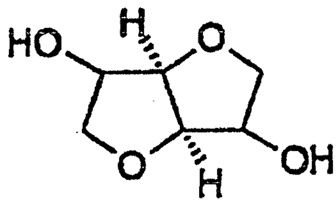

(2)

wobei ein Gehalt der Struktureinheit, abgeleitet von der Dihydroxyverbindung, dargestellt durch die obige Formel (1), in dem zum Bilden der Schicht A zu verwendenden Polycarbonatharz 35 Mol-% oder mehr und 90 Mol-% oder weniger beträgt.

**2.** Das Laminat wie in Anspruch 1 beansprucht, wobei die Glasübergangstemperatur des zum Bilden der Schicht A zu verwendenden Polycarbonatharzes 45 bis 155°C beträgt.

**3.** Das Laminat wie in Anspruch 1 beansprucht, wobei ein Viskositätsmittel des Molekulargewichts (Mv) des zum Bilden der Schicht B zu verwendenden Polycarbonatharzes 8.000 bis 30.000 beträgt.

**4.** Das Laminat wie in Anspruch 1 beansprucht, wobei eine verminderte Viskosität des aromatischen Polycarbonatharzes 0,23 dl/g bis 0,72 dl/g beträgt.

**5.** Das Laminat wie in einem der Ansprüche 1 bis 4 beansprucht, wobei die Schicht A auf jede der beiden Oberflächen der Schicht B laminiert ist.

**6.** Das Laminat wie in einem der Ansprüche 1 bis 5 beansprucht, das eine oder mehrere funktionelle Schichten aufweist, ausgewählt aus einer Hartbeschichtung, einer Antireflexschicht und einer Antifoulingschicht, wobei die funktionellen Schichten auf mindestens einer der beiden Oberflächen des Laminats angeordnet sind.

**7.** Das Laminat wie in einem der Ansprüche 1 bis 6 beansprucht, das weiter eine bedruckte Schicht aufweist.

**8.** Das Laminat wie in einem der Ansprüche 1 bis 7 beansprucht, wobei die Schicht A eine Gesamtdicke von 30 - 100 μm aufweist.

**9.** Das Laminat wie in einem der Ansprüche 1 bis 8 beansprucht, das eine Gesamtdicke von 0,15 - 3 mm aufweist.

**10.** Eine Display-Abdeckung, erhalten durch Verarbeiten des Laminats nach einem der Ansprüche 1 bis 9 durch Stanzen.

**11.** Ein Baustoffelement, erhalten durch Verarbeiten des Laminats nach einem der Ansprüche 1 bis 9.

**12.** Ein thermogeformter Gegenstand, erhalten durch Thermoformen des Laminats nach einem der Ansprüche 1 bis 9.

**13.** Ein Dosenimitat für Verkaufsautomaten, das den thermogeformten Gegenstand nach Anspruch 12 umfasst.

**14.** Eine Durchdrück-Verpackung (press-through package), die den thermogeformten Gegenstand nach Anspruch 12

umfasst.

**15.** Ein Formgegenstand, hergestellt durch In-mold-Integration, der erhalten wurde durch Formen einer Trägerschicht auf einer Oberfläche des thermogeformten Gegenstands nach Anspruch 12 durch Spritzgießen eines geschmolzenen Harzes.

## Revendications

**1.** Stratifié **caractérisé par** la stratification d'une couche A de résine polycarbonate qui contient un motif structural dérivé d'un composé dihydroxy comportant, dans sa structure, un site représenté par la formule (1) suivante, et un motif structural autre que le motif structural dérivé dudit composé dihydroxy sur une couche B de résine polycarbonate aromatique,

[Formule chim. 1]

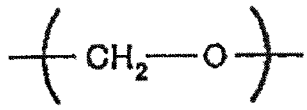

(1)

dans lequel le composé dihydroxy est un composé dihydroxy représenté par la formule (2) suivante, et

[Formule chim. 2]

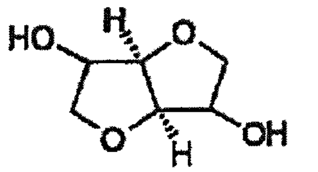

(2)

dans lequel une teneur en motif structural dérivé du composé dihydroxy représenté par la formule (1) ci-dessus dans la résine polycarbonate utilisée pour former la couche A est de 35 % molaire ou plus et de 90 % molaire ou moins.

**2.** Stratifié selon la revendication 1, dans lequel la température de transition vitreuse de la résine polycarbonate utilisée pour former la couche A est de 45 à 155 °C.

**3.** Stratifié selon la revendication 1, dans lequel un poids moléculaire moyen en viscosité (Mv) de la résine polycarbonate aromatique utilisée pour former la couche B est de 8 000 à 30 000.

**4.** Stratifié selon la revendication 1, dans lequel une viscosité réduite de la résine polycarbonate aromatique est de 0,23 à 0,72 dL/g.

**5.** Stratifié selon l'une quelconque des revendications 1 à 4 qui a la couche A stratifiée sur chacune des deux surfaces de la couche B.

**6.** Stratifié selon l'une quelconque des revendications 1 à 5 qui a une ou plusieurs couches fonctionnelles choisies parmi une couche de revêtement dur, une couche antireflets, et une couche antisalissures, les couches fonctionnelles ayant été disposées sur au moins une des deux surfaces du stratifié.

**7.** Stratifié selon l'une quelconque des revendications 1 à 6 qui a en outre une couche imprimée.

**8.** Stratifié selon l'une quelconque des revendications 1 à 7 dans lequel la couche A a une épaisseur globale de 30 à 100 μm.

**9.** Stratifié selon l'une quelconque des revendications 1 à 8 qui a une épaisseur globale de 0,15 à 3 mm.

**10.** Protège-écran obtenu par traitement du stratifié selon l'une quelconque des revendications 1 à 9 par poinçonnage.

**11.** Elément de matériau de construction obtenu par traitement du stratifié selon l'une quelconque des revendications 1 à 9.

**12.** Objet thermoformé obtenu par thermoformage du stratifié selon l'une quelconque des revendications 1 à 9.

**13.** Canette factice pour distributeurs automatiques qui comprend l'objet thermoformé selon la revendication 12.

**14.** Emballage à ouverture par enfoncement qui comprend l'objet thermoformé selon la revendication 12.

**15.** Objet moulé produit par intégration dans le moule, qui a été obtenu par formation d'une couche de support sur une surface de l'objet thermoformé selon la revendication 12 par moulage par injection d'une résine à l'état fondu.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000321993 A
- JP 2001134196 A
- JP 2002232542 A
- JP 2004130540 A
- JP 2004143365 A
- JP 2007237700 A
- US 20090105444 A1
- WO 2004111106 A
- WO 2007148604 A